# EUROPÄISCHE PATENTSCHRIFT

(11) **EP 3 542 232 B1**
(45) Veröffentlichungstag und Bekanntmachung des Hinweises auf die Patenterteilung: **20.04.2022**
(21) Anmeldenummer: 17801045.0
(22) Anmeldetag: 21.11.2017
(51) Int. Cl.: G05B 19/042

(54) **STEUERUNG FÜR EINE INDUSTRIELLE AUTOMATISIERUNGSANLAGE UND VERFAHREN ZUM PROGRAMMIEREN UND BETREIBEN EINER DERARTIGEN STEUERUNG**
CONTROL SYSTEM FOR AN INDUSTRIAL AUTOMATION FACILITY AND METHOD FOR PROGRAMMING AND OPERATING SUCH A CONTROL SYSTEM
COMMANDE D'UN SYSTÈME D'AUTOMATISATION INDUSTRIELLE ET PROCÉDÉ DE PROGRAMMATION ET D'EXPLOITATION D'UNE TELLE COMMANDE

(30) Priorität: 21.11.2016 DE 102016122324
(43) Veröffentlichungstag der Anmeldung: 25.09.2019
(73) Patentinhaber: Weidmüller Interface GmbH & Co. KG, 32758 Detmold (DE)
(72) Erfinder: KRONER, Michael, 33813 Oerlinghausen (DE); BIRNBAUM, Immo, 33106 Paderborn (DE); BRINKMANN, Sebastian, 33102 Paderborn (DE); BROCKMEYER, Michael, 32756 Detmold (DE); HARRING, Felix, 32756 Detmold (DE); HERBRECHTSMEIER, Stefan, 33803 Steinhagen (DE); PETERS, Christian, 33813 Oerlinghausen (DE)
(74) Vertreter: Kleine, Hubertus
(86) Internationale Anmeldenummer: PCT/EP2017/079932
(87) Internationale Veröffentlichungsnummer: WO 2018/091741

(56) Entgegenhaltungen:
- US-B2- 8 131 827
- IGARASHI KEIKO ET AL: "Symbols and Rules for a Self-Explanatory Machine Model", 2014 IEEE 8TH INTERNATIONAL SYMPOSIUM ON EMBEDDED MULTICORE/MANYCORE SOCS, IEEE, 23. September 2014 (2014-09-23), Seiten 49-54, XP032678371, DOI: 10.1109/MCSOC.2014.16 [gefunden am 2014-11-06]
- HAUSLADEN JURGEN ET AL: "A cloud-based integrated development environment for embedded systems", 2014 IEEE/ASME 10TH INTERNATIONAL CONFERENCE ON MECHATRONIC AND EMBEDDED SYSTEMS AND APPLICATIONS (MESA), IEEE, 10. September 2014 (2014-09-10), Seiten 1-5, XP032669618, DOI: 10.1109/MESA.2014.6935577 [gefunden am 2014-10-24]

## Beschreibung

Die Erfindung betrifft ein Verfahren zum Programmieren und Betreiben einer Steuerung einer industriellen Automatisierungsanlage, bei dem ein Programm für die Steuerung mit einem Entwicklungswerkzeug erstellt wird.

Die Erfindung betrifft weiterhin eine zur Durchführung des Verfahrens geeignete Steuerung.

Industrielle Automatisierungsanlagen dienen der Ablaufsteuerung und Überwachung von automatisierten Industrieanlagen. Sie weisen üblicherweise eine industrielle Automatisierungssteuerung auf, die auch als speicherprogrammierbare Steuerung (SPS) bezeichnet wird und die nachfolgend abgekürzt Steuerung genannt wird. Die Steuerung ist über einen Feldbus unmittelbar oder über einen Feldbuskoppler, auch Feldbus-Gateway genannt, mit Feldgeräten gekoppelt. Feldgeräte sind beispielsweise Ein- und/oder Ausgabemodule, abgekürzt auch als E/A-Module bezeichnet, die analoge und/oder digitale Ein- und/oder Ausgabekanäle bereitstellen, über die Anlagenkomponenten gesteuert werden können und Messwerte, beispielsweise von Sensoren, eingelesen werden können.

Zur Programmierung der Steuerung wird üblicherweise eine externe Entwicklungsumgebung (engineering tool) eingesetzt. Gemäß der Norm IEC 61131 kann das zugrunde liegende Programm in verschiedenen Formen eingegeben werden. Eine häufig verwendete Form ist eine Darstellung mittels Funktionsbausteinen, die Logikbausteinen ähneln. Diese Funktionsbausteine können in einer grafischen Bedienoberfläche positioniert und miteinander verknüpft werden. Alternativ sind auch textbasierte Programmierungen möglich.

Das vom Anwender erstellte Programm wird in der Entwicklungsumgebung durch einen Übersetzer in einen ausführbaren Programmcode gewandelt, der auf die Steuerung übertragen und dort ausgeführt wird. Zudem stellt die Entwicklungsumgebung üblicherweise einen Mechanismus zur Versionskontrolle bereit, d.h., dass ältere Programmversionen in einer Datenbank, auch "repository" genannt, abgelegt werden, so dass gegebenenfalls auf sie zugegriffen werden kann.

Eine derartige Entwicklungsumgebung ist insofern nachteilig, als dass zur Programmierung der Steuerung ein mit dieser Entwicklungsumgebung ausgestatteter Rechner, z.B. ein PC, vorhanden sein muss, der mit der Steuerung gekoppelt ist. Greifen mehrere Entwickler von unterschiedlichen PCs mit einer derartigen Entwicklungsumgebung auf die Steuerung zu, ist zudem eine konsistente Versionshistorie nicht gewährleistet.

In dem Artikel "Symbols and Rules for a Self-explanatory Machine Model", Keiko Igarashi et al., 2014 IEEE 8th International Symposium on Embedded Multicore/Manycor SoCs, wird eine intuitive Programmiermethode für industrielle Automatisierungssteuerungen beschrieben, die sich für eine Cloud-basierte Entwicklung eignet. Vorteilhaft ist dabei, dass auch ohne eine lokal vorhandene Entwicklungsumgebung Programme für Steuerungen entwickelt werden können. Um ein erstelltes Programm auf einer Steuerung ablaufen lassen zu können, wird auf einen externen Compiler zurückgegriffen. Somit wird wiederum ein mit der Steuerung verbundener Rechner benötigt, um das erstellte Programm in ein ablauffähiges Binärprogramm zu übersetzen und dieses zur Ausführung auf die Steuerung zu übertragen.

Die Druckschrift US 8,131,827 B2 beschreibt eine Steuerung einer ein industriellen Automatisierungsanlage, die innerhalb eines Netz-Zugangsmoduls mit einem Web-Server gekoppelt ist. Im Netz-Zugangsmodul ist ein Programm für die Steuerung und eine zur Bearbeitung des Programms geeignete Entwicklungsumgebung gespeichert. Von einem externen Rechner kann über das Internet das Programm für die Steuerung und die Entwicklungsumgebung abgerufen werden und das Programm bearbeitet werden. Das bearbeitete Programm wird an das Netz-Zugangsmoduls zurückgesendet und von dort von der Steuerung ausgeführt. Auch hierbei ist es vorteilhaft, dass ohne eine lokal vorhandene Entwicklungsumgebung Programme für Steuerungen entwickelt werden können. Um allerdings das Programm auf dem externen Rechner für die Steuerung lauffähig erstellen zu können, müssen alle von der Hardware der Steuerung abhängigen Komponenten der Entwicklungsumgebung, beispielsweise hardware-spezifische Bibliotheken, mit an den externen Rechner übertragen werden, was zu einem erhöhten Aufwand, z.B. aufgrund eines hohen Datenvolumens, bei der Übertragung der Entwicklungsumgebung führt.

Der Erfindung liegt die Aufgabe zugrunde, ein Verfahren zu beschreiben, mit dem eine Programmierung einer Steuerung unabhängig von externen Rechnern, die mit einer Entwicklungsumgebung ausgestattet sind, erfolgen kann. Es ist eine weitere Aufgabe, eine zur Durchführung des Verfahrens geeignete Steuerung anzugeben.

Diese Aufgabe wird durch ein Verfahren bzw. eine industrielle Automatisierungssteuerung mit den Merkmalen des jeweiligen unabhängigen Anspruchs gelöst. Vorteilhafte Ausgestaltungen und Weiterbildungen sind in den abhängigen Ansprüchen angegeben.

Ein erfindungsgemäßes Verfahren zeichnet sich dadurch aus, dass die Steuerung mithilfe eines integrierten Webservers eine webbasierte Entwicklungsumgebung an einem über ein Netzwerk mit der Steuerung verbundenen Rechner überträgt und in einem Webbrowser, der auf dem Rechner ausgeführt wird, darstellt. Ein vom Benutzer unter Nutzung der dargestellten Entwicklungsumgebung erstelltes und/oder bearbeitetes Programm wird mittels eines in der ausgelieferten Webseite enthaltenen Übersetzungsmoduls in ein Hochsprachenprogramm übersetzt, das über das Netzwerk an die Steuerung übertragen wird. In der Steuerung wird das empfangene Hochsprachenprogramm in ein zur Ausführung auf der Steuerung geeignetes Binärprogramm übersetzt und dieses durch die Steuerung ausgeführt.

Dadurch, dass die Entwicklungsumgebung von dem Webserver, der in der Steuerung enthalten ist, an einen angeschlossenen Rechner übertragen wird, ist es nicht erforderlich, Rechner mit spezieller Entwicklungsumgebung zur Programmierung einzusetzen. Stattdessen kann jeder Rechner (PC, Tablet usw.), der über einen Webbrowser verfügt, zur Programmierung eingesetzt werden. Diese Universalität wird zusätzlich dadurch unterstützt, dass im Webbrowser nicht ein unmittelbar von der Steuerung ausführbares Binärprogramm erstellt wird, sondern ein Hochsprachenprogramm, beispielsweise in C oder C++, das in dem Sinne universell ist, als dass es keine hardwarespezifischen Elemente der Steuerung enthält. Derartige hardwarespezifische Elemente können in einem nachfolgenden Übersetzungsprozess des Hochsprachenprogramms in die ausführbare Sprache hinzugefügt werden.

In einer bevorzugten Ausgestaltung des Verfahrens wird das Programm in einer grafischen Programmiersprache erstellt bzw. überarbeitet. Die grafische Programmiersprache kann beispielsweise Funktionsblöcke enthalten, mit der eine Programmierung der Steuerung auf intuitive Weise erfolgen kann. Alternativ können andere geeignete Programmiersprachen zur Erstellung des Programms genutzt werden.

In einer vorteilhaften Weiterbildung wird neben dem Hochsprachenprogramm auch das vom Benutzer erstellte oder überarbeitete Programm selbst von dem Rechner oder Webbrowser an die Steuerung übertragen. Bevorzugt ist dann vorgesehen, innerhalb der Steuerung das Programm und/oder das Hochsprachenprogramm und/oder das Binärprogramm gemeinsam in einem Versionsspeicher abzulegen. Zumindest das Programm und das daraus erstellte Binärprogramm sollten dabei einander zugeordnet abgelegt werden. Durch den Versionsspeicher, der beispielsweise in Form einer Datenbank ausgebildet sein kann, ist nicht nur die aktuell ausgeführte Programmversion verfügbar, sondern auch zurückliegende Entwicklungsstände abspeicherbar. Jeder auf dem Webserver der Steuerung zugreifende Rechner kann somit auf das aktuell ausgeführte Programm und auch bei Bedarf auf zurückliegende Programmversionen zurückgreifen.

Die jederzeit nachvollziehbare Zuordnung von Binärprogramm und Programm verhindert eine ungewollte Aufsplittung eines Programms in verschiedene Entwicklungszweige dadurch, dass beispielsweise ungewollt ältere Entwicklungsstände des Programms weiter gebildet werden, obwohl bereits neuere Entwicklungsstände existieren. Unabhängig von dem zugreifenden Rechner steht bei der genannten Weiterbildung die vollständige Versionsgeschichte jedem Webbrowser zur Verfügung.

In einer weiteren vorteilhaften Weiterbildung des Verfahrens ist vorgesehen, in einer Anordnung mit mindestens zwei Steuerungen von einem Rechner bzw. einem Webbrowser aus Programme für beide Steuerungen in einem übergeordneten Projekt zu bearbeiten. Auf diese Weise kann flexibel mit sogenannten verteilten Projekten gearbeitet werden, bei denen einzelne Steuerungen unterschiedliche Teilprojekte in einem gemeinsamen, übergeordneten Projekt wahrnehmen.

Dadurch, dass Entwicklungsstände im genannten Versionsspeicher einer jeden Steuerungen abgespeichert werden, ist auch bei einem derartigen verteilten Arbeiten jederzeit eine Datenkonsistenz für die Programme gegeben. Dieses gilt sogar für eine flexible Mischnutzung, bei der Teilprojekte an einzelnen Steuerungen separat und ggf. im Rahmen eines übergeordneten Projekts geändert werden.

Um das übergeordnete Projekt auch bearbeiten zu können, wenn eine der Steuerungen für den Webbrowser des übergeordneten Bearbeiters nicht erreichbar ist, kann vorgesehen sein, im Rechner des übergeordneten Bearbeiters eine Spiegelung des Versionsspeichers der Einzelsteuerung abzulegen. Nach Wiederverbindung mit der Steuerung werden die Versionsspeicher der Steuerung und des Rechners und des übergeordneten Bearbeiters bevorzugt automatisiert synchronisiert.

In einer bevorzugten Ausgestaltung des Verfahrens wird eine Datenbank genutzt, um die Versionsgeschichte der Programme abzuspeichern. Bevorzugt wird ein Datenbanktyp verwendet, für den geeignete Techniken zur Spiegelung und Konsistenzhaltung verfügbar sind, auf die zurückgegriffen werden kann. Eine erfindungsgemäße Steuerung weist einen Webserver auf, der dazu eingerichtet ist, eine Entwicklungsumgebung an einen angeschlossenen Rechner auszuliefern. Es ergeben sich die im Zusammenhang mit dem Verfahren genannten Vorteile.

In einer vorteilhaften Weiterbildung der Steuerung weist diese ein Echtzeitsystem zum Ausführen eines Binärprogramms zum Durchführen von Steuerungsaufgaben und ein Nicht-Echtzeitsystem zur Bereitstellung des Webservers auf. Das technisch aufwändigere zu realisierende Echtzeitsystem ist so den Steuerungsaufgaben vorbehalten, wobei weitere Aufgaben der Steuerung, z. B. im Zusammenhang mit der Bereitstellung des Webservers, im weniger aufwändigen Nicht-Echtzeitsystem ausgeführt werden können.

Eine wirksame und sichere Trennung zwischen dem Echtzeitsystem und dem Nicht-Echtzeitsystem kann in einer Ausgestaltung der Steuerung dadurch erfolgen, dass dem Echtzeitsystem und dem Nicht-Echtzeitsystem unterschiedliche Prozessoren zugeordnet sind. Eine im Hinblick auf die Kosten demgegenüber vorteilhafte Alternative besteht darin, einen Prozessor für die Steuerung vorzusehen, der mindestens zwei Kerne aufweist, wobei mindestens ein Kern dem Echtzeitsystem und mindestens ein Kern dem Nicht-Echtzeitsystem zugeordnet ist. Jeder Kern wiederum kann exklusiv über zumindest einen ersten und ggf. auch einen zweiten (schnellen) Zwischenspeicher, auch Level 1 bzw. Level 2 Cache genannt, verfügen. In einer weiteren vorteilhaften Ausgestaltung weist die Steuerung einen Arbeitsspeicher auf, von dem ein Teil dem Echtzeitsystem und ein zweiter Teil dem Nicht-Echtzeitsystem exklusiv zugeordnet ist, wohingegen auf einen dritten Teil des Arbeitsspeichers sowohl das Echtzeit als auch das Nicht-Echtzeitsystem zugreifen kann. Auf diese Weise besteht mit dem exklusiv zugeordneten ersten und zweiten Teil eine Trennung der beiden Systeme, wohingegen der dritte, gemeinsam genutzte Teil einen Datenaustausch zwischen den Systemen ermöglicht, beispielsweise um das Binärprogramm nach dem Erstellen im Nicht-Echtzeitsystem in das Echtzeitsystem zu übertragen.

In einer weiteren vorteilhaften Ausgestaltung der Steuerung sind auch Schnittstellen, insbesondere externe Schnittstellen und hierbei vor allem Netzwerkschnittstellen, für das Echtzeitsystem und das Nicht-Echtzeitsystem in Hinblick auf die verwendete Hardware getrennt voneinander ausgeführt.

Die Erfindung wird nachfolgend anhand eines Ausführungsbeispiels mithilfe von Figuren näher erläutert. Die Figuren zeigen:
- Fig. 1: eine schematische Darstellung einer Steuerung einer industriellen Automatisierungsanlage mit einem gekoppelten Rechner, auf dem eine Entwicklungsumgebung zur Programmierung der Steuerung abläuft;
- Fig. 2: eine schematische Darstellung eines erfindungsgemäßen Verfahrens;
- Fig. 3: ein schematisches Blockdiagramm der Steuerung gemäß Fig. 1; und
- Fig. 4: ein schematisches Diagramm einer Anordnung mehrerer Steuerungen und eines damit gekoppelten Rechners zur Bearbeitung eines verteilten Projekts.

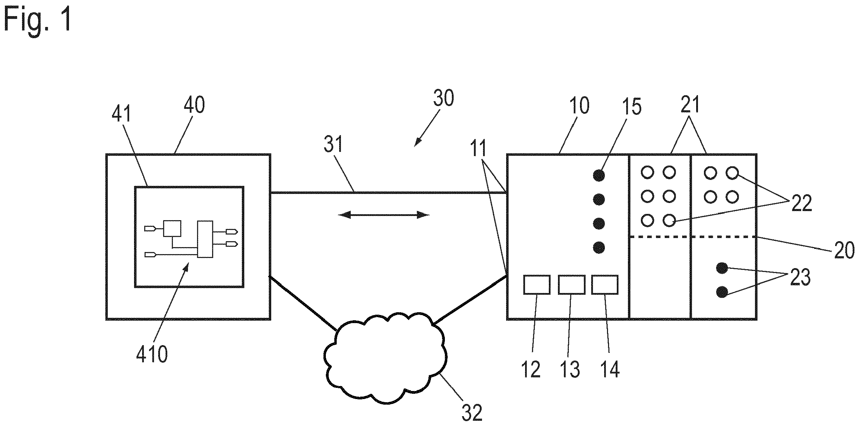

Fig. 1 zeigt in Form eines Blockdiagramms eine beispielhafte industrielle Automatisierungsanlage mit einer Steuerung 10. An die Steuerung 10 sind über ein Bussystem 20, das ein Feldbussystem oder ein proprietärer Bus sein kann, beispielhaft zwei E/A-Module 21 angebunden, die Eingänge 22 und Ausgänge 23 aufweisen, die mit Aktoren und/oder Sensoren der Industrieanlage gekoppelt sind. Die Steuerung 10 weist mindestens einen Netzwerkanschluss 11 auf, sowie weitere Anschlüsse, z.B. ein Feldbusanschluss 12, ein weiterer Feldbusanschluss 13, und ein USB (Universal Serial Bus) -Anschluss 14, sowie Kontrollanzeigen 15.

Die Steuerung 10 ist zu ihrer Programmierung über den Netzwerkanschluss 11 und ein Netzwerk 30 mit einem Rechner 40 verbunden. Der Rechner 40 wird nur zur Programmierung der Steuerung 10 eingesetzt; für den Steuerungsbetrieb ist die Steuerung 10 unabhängig vom Rechner 40 und kann autark ohne diesen betrieben werden.

Beispielhaft sind zwei Verbindungen zwischen der Steuerung 10 und dem Rechner 40 über das Netzwerk 30 dargestellt, einmal eine direkte Verbindung über ein Netzwerkkabel 31 und eine Verbindung über ein Internet 32. Zur Verbindung über das Internet 32 können bekannte Verbindungsarten verwendet werden, über die internetspezifische Protokolle ausgetauscht werden können.

Im Rechner 40 wird ein Webbrowser 41 ausgeführt, der eine von der Steuerung 10 bereitgestellte Webseite ausführt, die eine Entwicklungsumgebung umfasst. Symbolisiert ist die Entwicklungsumgebung im Webbrowser 41 durch ein Programm 410 in Form eines Funktionsblockdiagramms, das eine nach der Norm IEC 61131 gültige grafische Programmiermethode für die Steuerung 10 darstellt.

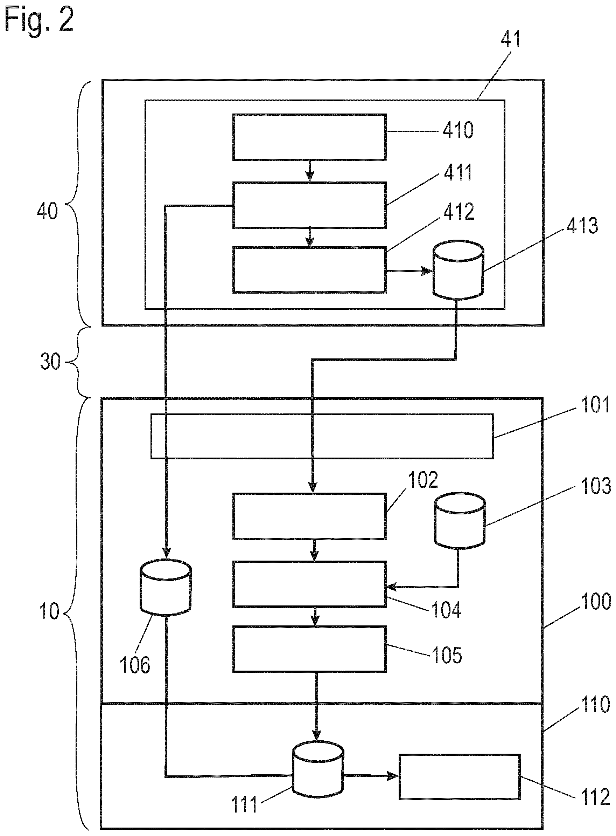

Fig. 2 zeigt das Zusammenspiel von Steuerung 10 und Rechner 40 zur Programmierung der Steuerung 10 detaillierter in einem Blockdiagramm. Aus Gründen der Übersichtlichkeit ist das an die Steuerung 10 angebundene Bussystem 20 in der Fig. 2 nicht wiedergegeben.

Die Steuerung 10 ist in zwei Abschnitte unterteilt, von denen ein erster ein Nicht-Echtzeitsystem 100 darstellt und ein zweiter ein Echtzeitsystem 110. Im Echtzeitsystem 110 werden die Steuerungsaufgaben durchgeführt. Das Echtzeitsystem 110 umfasst einen Speicherbereich, in dem ein auszuführendes Binärprogramm 111 abgelegt ist sowie die gesamte Ablaufsteuerung 112. Diese Funktionalität ist grundsätzlich bekannt und soll hier nicht näher erläutert werden.

Im Nicht-Echtzeitsystem 100 ist ein Webserver 101 angeordnet, der Daten über das Netzwerk 30 ausgibt und entgegennimmt.

Der Rechner 40 umfasst wie bereits im Zusammenhang mit Fig. 1 erläutert, einen Webbrowser 41, der mit dem Webserver 101 der Steuerung 10 kommuniziert. Bei Verbindung des Rechners 40 mit der Steuerung 10 und beim Aufruf des Webbrowsers 41 werden Webseiten von dem Webserver 101 an den Webbrowser 41 übertragen, die im Webbrowser 41 ein Entwicklungssystem bereitstellen.

Im Entwicklungssystem ist eine grafische Eingabemöglichkeit ("editor") für ein Programm 410, z.B. in Form eines Funktionsblockdiagramms, enthalten. Der Benutzer des Webbrowsers 41 kann durch Zusammenstellen und Verbinden von Funktionsblöcken das Programm, das auf der Steuerung 10 ausgeführt werden soll, zusammenstellen.

Dieses Programm 410 wird durch einen ebenfalls in der Entwicklungsumgebung enthaltenen Hochsprachenübersetzer 412 in ein Hochsprachenprogramm 413 übersetzt. Dieses Hochsprachenprogramm 413 wird in einem Speicherbereich des Rechners 40, auf den der Webbrowser 41 zugreifen kann, abgelegt. Bevorzugt ist das Hochsprachenprogramm 413 ein C-Programm, oder ein C++-Programm, es können jedoch auch andere bekannte Programmiersprachen eingesetzt werden. Der Vorteil der Umsetzung in ein Hochsprachenprogramm 413 liegt in der Hardwareunabhängigkeit von der Steuerung 10.

Zusätzlich ist in der Entwicklungsumgebung eine Versionsverwaltung 411 umgesetzt, die bestimmte Versionsstände des Programms 410, die in das Hochsprachenprogramm 413 übersetzt werden, erfasst und an die Steuerung 10 weiterleitet. Eine Abspeicherung der Versionsstände erfolgt in einem Versionsspeicher 106, der in der Steuerung 10 im Nicht-Echtzeitsystem 100 vorgesehen ist. Auf diese Weise kann unabhängig vom verwendeten Rechner 40 auf verschiedene Versionsstände des Programms 410 zurückgegriffen werden.

Das Hochsprachenprogramm 413 wird dann vom Rechner 40 über das Netzwerk 30 zu dem Webserver 101 der Steuerung 10 übertragen. Bevorzugt werden bekannte webbasierte Synchronisationsmechanismen für Datenbanken für diesen Zweck eingesetzt.

In der Steuerung 10 wird das Hochsprachenprogramm 413 an einen Hochsprachenübersetzer ("compiler") 102 weitergeleitet, der das Hochsprachenprogramm 413 in ein ausführbares Programm übersetzt. Diesem Programm werden in einem nachfolgenden Link-Prozess durch einen Linker 104 hardwarespezifische Bibliotheken 103 hinzugefügt. Das entstandene Programm wird in dem Schritt einer Installation 105 als Binärprogramm 111 an das Echtzeitsystem 110 ausgeliefert ("deployment"), und steht damit zur Ausführung auf der Steuerung 10 durch die Ablaufsteuerung 112 zur Verfügung.

Soll dieses Programm weiterentwickelt werden, kann das unabhängig von dem Rechner 40, mit dem es ursprünglich erstellt wurde, abgeändert oder weiterentwickelt werden. Dazu ist jeder beliebige Rechner 40, der lokal oder weltweit über das Netzwerk 30 mit der Steuerung 10 gekoppelt wird, in der Lage, über seinen Webbrowser 41 die Entwicklungsumgebung von der Steuerung 10 zu beziehen und auch das aktuelle oder eine ältere Version des Programms 410 einzuladen, um es weiterzuentwickeln. Nach Änderung des Programms 410 wird dieses dann von dem dann benutzten Rechner 40 in der zuvor beschriebenen Weise an die Steuerung 10 übertragen, dort in ein Binärprogramm 111 übersetzt und zur Ausführung gebracht.

Dabei sind bevorzugt Sicherheitsmechanismen vorgesehen, die einen unbefugten Zugriff auf die Steuerung 10 unterbinden. Neben Zugriffsbeschränkungen, die das Netzwerk 30 betreffen, stellt der Übergang vom Nicht-Echtzeitsystem 100 zum Echtzeitsystem 110 eine kontrollierbare Grenze dar, die verwendet werden kann, um einen unerlaubten Zugriff auf die Ablaufsteuerung 112 zu unterbinden.

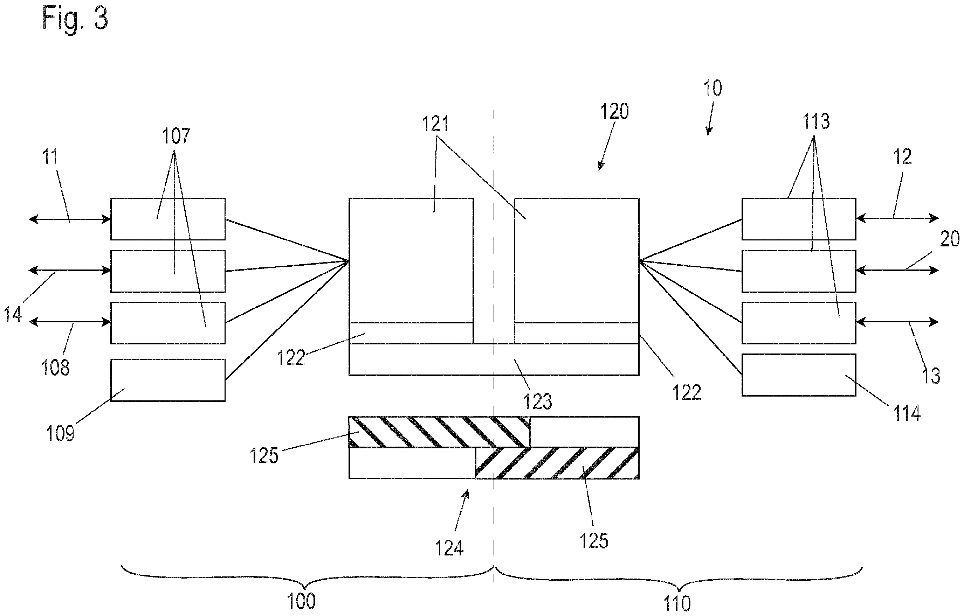

Fig. 3 zeigt die Steuerung 10 im Hinblick auf ihren hardwaremäßigen Aufbau in einer schematischen Darstellung. Die Fig. 3 dient insbesondere dazu, die Aufteilung der Hardware im Hinblick auf das Nicht-Echtzeitsystem 100 und das Echtzeitsystem 110 zu verdeutlichen.

Die beispielhaft dargestellte Steuerung 10 zeichnet sich dadurch aus, dass ein gemeinsam vom Nicht-Echtzeitsystem 100 und vom Echtzeitsystem 110 genutzter Prozessor 120 vorgesehen ist. Es wird angemerkt, dass auch eine Ausgestaltung der Steuerung 10, bei der für das Nicht-Echtzeitsystem 100 und für das Echtzeitsystem 110 jeweils ein eigener Prozessor vorhanden ist, möglich ist. Das dargestellte Ausführungsbeispiel ist jedoch im Hinblick auf eine Kostenoptimierung vorteilhafter und bietet dennoch eine sichere Trennung zwischen dem Nicht-Echtzeitsystem 100 und dem Echtzeitsystem 110.

Der Prozessor 120 weist im dargestellten Ausführungsbeispiel zwei Kerne 121 auf, die unabhängig voneinander arbeitende Rechenwerke darstellen. In alternativen Ausgestaltungen ist auch die Verwendung von Prozessoren mit mehr als zwei Kernen möglich, wobei zumindest jeweils einer der Kerne dem Nicht-Echtzeitsystem 100 und einer der Kerne dem Echtzeitsystem 110 zugeordnet ist.

Jeder Kern 121 weist einen separaten, nur von diesem Kern 121 nutzbaren ersten Zwischenspeicher 122, auch "Level 1 Cache" genannt, auf. Ein zweiter Zwischenspeicher 123, auch "Level 2 Cache" genannt, ist von beiden Kernen 121 nutzbar. Auch hier sind alternative Ausgestaltungen möglich, die separate zweite Zwischenspeicher nutzen.

Weiter weist die Steuerung 10 einen Arbeitsspeicher 124 auf, der ebenfalls von beiden Kernen 121 genutzt werden kann und von daher sowohl dem Nicht-Echtzeitsystem 100, als auch dem Echtzeitsystem 110 zur Verfügung steht. Ein hier nicht dargestellter Speicherverwaltungsbaustein regelt den Zugriff des Prozessors 120 auf den Arbeitsspeicher 124. Dabei ist vorgesehen, den beiden Kernen 121 verschiedene Arbeitsspeicherbereiche 125 zuzuweisen, die sich innerhalb des Arbeitsspeichers 124 teilweise überlappen. Auf diese Weise steht ein erster Teil des Arbeitsspeichers 124 nur dem Kern 121 des Nicht-Echtzeitsystem 100 zur Verfügung und ein zweiter Teil des Arbeitsspeichers 124 steht nur dem Kern 121 des Echtzeitsystems 110 zur Verfügung. Ein dritter Teil des Arbeitsspeichers 124 kann von beiden Kernen 121 genutzt werden und steht somit sowohl dem Nicht-Echtzeitsystem 100 als auch dem Echtzeitsystem 110 zur Verfügung. Dieser dritte Teil des Arbeitsspeichers 124 kann genutzt werden, um Daten zwischen dem Nicht-Echtzeitsystem 100 und dem Echtzeitsystem 110 auszutauschen. Eine vergleichbare Aufteilung kann auch für den zweiten Zwischenspeicher 123 vorgesehen sein.

Durch die Trennung des Prozessors 120 und des Arbeitsspeichers 124 in separate Kerne 121 bzw. Teile des Arbeitsspeichers 124 die nur dem Nicht-Echtzeitsystem 100 bzw. dem Echtzeitsystem 110 zugeordnet sind, wird eine sichere Umgebung für das Echtzeitsystem 110 geschaffen, um dieses vor unzulässigen Zugriffen durch das Nicht-Echtzeitsystem 100 zu schützen. Die Produktionsumgebung, die von der Steuerung 10 kontrolliert wird, ist somit gegenüber unberechtigten Zugriffen, beispielsweise aus dem Internet und darüber verbreitete Schadsoftware gesichert.

Entsprechend kann auch eine Softwareaktualisierung ("Update") getrennt für das Echtzeitsystem 110 und das Nicht-Echtzeitsystem 100 vorgenommen werden. Letzteres erfordert in der Regel häufiger eine Aktualisierung, um bekannt gewordene Sicherheitslücken schließen zu können. Bei dem Echtzeitsystem 110 werden Aktualisierungen eher vermieden, um ein laufendes System nicht unterbrechen zu müssen und eine Gefahr von nicht absehbaren Folgen der Aktualisierung zu minimieren. Die strenge Abschottung des Echtzeitsystems 110 kommt dem zugute, da abgeschottete Systeme seltener ausnutzbare Sicherheitslücken aufweisen.

Die Trennung und Absicherung spiegelt sich auch in den Verbindungen der Steuerung 10 zu externen Geräten wider. Insbesondere sind Netzwerkverbindungen für das Nicht-Echtzeitsystem 100 und das Echtzeitsystem 110 möglichst voneinander getrennt. Die Steuerung 10 weist daher Schnittstellen 113 im Echtzeitsystem 110 auf, beispielsweise eine Ethernet-Schnittstelle, die den (hier beispielhaft Ethernet-basierten) Feldbusanschluss 12 bedient, eine Rückwandbus-Schnittstelle, die das Bussystem 20 für die E/A-Module 21 bedient, und hier beispielhaft eine weitere Feldbusschnittstelle 13, z.B. für einen CAN (Controller Area Network)-Bus. Zusätzlich kann für das Echtzeitsystem 110 ein nicht flüchtiger Speicher 114, zum Beispiel ein Flash-Speicher, vorhanden sein.

Auch das Nicht-Echtzeitsystem 100 weist Schnittstellen 107 auf, beispielsweise eine Ethernet-Schnittstelle für den Netzwerkanschluss 11 zur Verbindung mit einem innerbetrieblichen Ethernet. Eine weitere der Schnittstellen 107 ist beispielsweise eine USB-Schnittstelle, die den USB-Anschluss 14 bedient. Darüber hinaus kann eine Schnittstelle für einen Kartenslot 108 vorgesehen sein, in die z.B. eine SD-Karte eingesteckt werden kann. Ähnlich wie beim Echtzeitsystem 110 kann auch ein fest eingebauter nicht-flüchtiger Speicher 109 vorgesehen sein, beispielsweise in Form einer eMMC-Karte (embedded Multimedia Card).

Das anmeldungsgemäße Verfahren zum Erstellen von Binärprogrammen 111 für die eigentliche Ablaufsteuerung 112 der Steuerung 10 über einen Webbrowser 41, der in einem (externen) Rechner 40 betrieben wird, ist im Zusammenhang mit Fig. 2 für die Kombination einer Steuerung 10 und eines Rechners 40 beschrieben worden.

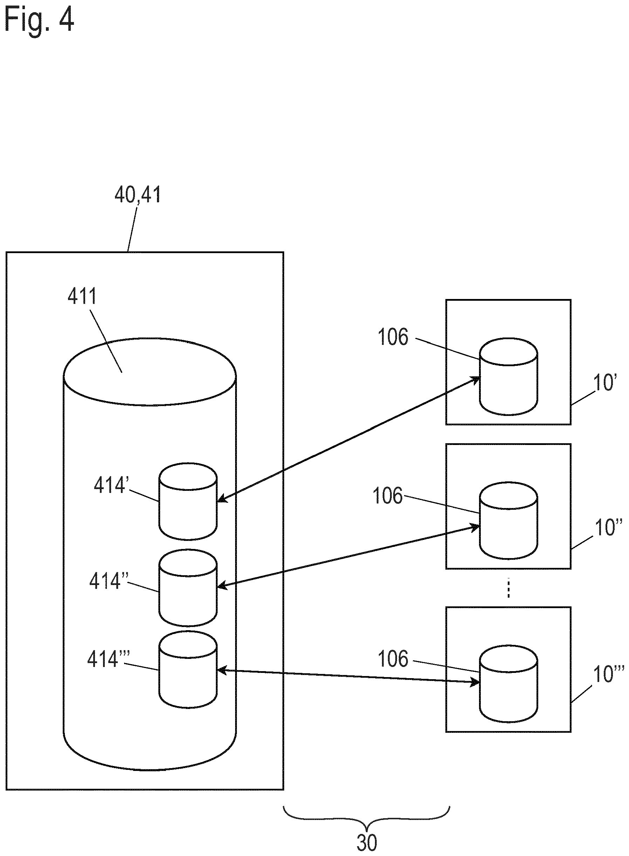

Nachfolgend wird mit Bezug auf Fig. 4 eine Anordnung beschrieben, bei der mehrere Steuerung 10', 10" und 10‴ in einem sogenannten verteilten Projekt vorhanden sind, die von einem Rechner 40 aus verwaltet und programmiert werden können. Die Anzahl der hier gezeigten drei Steuerungen ist dabei rein beispielhaft. Die Anzahl kann auch zwei betragen oder größer als drei sein.

Jede der genannten Steuerungen 10', 10" und 10‴ ist beispielsweise so aufgebaut, wie im Zusammenhang mit den vorherigen Figuren beschrieben ist. Insbesondere weist jede der Steuerungen 10', 10" und 10‴ einen eigenen Webserver auf, der über ein Netzwerk 30 zugänglich ist. Weiter ist in jeder der Steuerungen 10', 10" und 10‴ ein Versionsspeicher 106 vorgesehen, in dem ein oder mehrere Steuerungsprogramme sowohl in einer binären Version (vgl. Binärprogramm 111 in Fig. 2) als auch in Form von Quellcodes (vgl. z.B. als Funktionsblockdiagramm 411 gemäß Fig. 1), gegebenenfalls in verschiedenen Entwicklungsständen, abgelegt ist.

Zum Bearbeiten oder Erstellen der Programme im Versionsspeicher 106 der Steuerungen 10', 10" und 10" kann vom Rechner 40 aus, wie zuvor beschrieben, über einen Webbrowser 41 auf jede der Steuerungen 10', 10" und 10‴ zugegriffen werden und das entsprechende Programm zur Bearbeitung eingeladen werden, gegebenenfalls erstellt oder geändert werden. Auf diese Weise können mehrere Steuerungen 10 zentral von einem Rechner 40 aus betreut werden.

In einer vorteilhaften Ausgestaltung ist dabei vorgesehen, vom Rechner 40 aus ein übergeordnetes Projekt zu definieren, mit dem die involvierten Steuerungen 10', 10", 10‴ verwaltet werden. Innerhalb der Versionsverwaltung 411 des übergeordneten Projekts wird bevorzugt für jede der involvierten Steuerungen 10', 10" und 10‴ eine Spiegelung der Versionsspeicher 106 angelegt. Diese Spiegelungen sind innerhalb der Versionsverwaltung 411 als Versionsspeicherspiegelungen 414', 414" und 414‴ in der Fig. 4 dargestellt. Bevorzugt wird zu dem Zweck in dem Rechner 40 selbst oder auf einem weiteren Rechner (Server) ein Webserver betrieben, der Vergleichbar mit dem Webserver 101 der Steuerungen 10', 10", 10‴ die verwendete Entwicklungsumgebung in Form von Webseiten bereitstellt.

Die Versionsspeicherspiegelungen 414', 414" und 414‴ bieten den Vorteil, dass gegebenenfalls auch dann an Programmen für die Steuerungen 10', 10", 10‴ am zentralen Rechner 40 gearbeitet werden kann, wenn die betreffende Steuerung 10', 10", 10‴ aktuell nicht verfügbar ist. Ist die Steuerung 10', 10", 10‴ wieder verfügbar, beispielsweise weil der Rechner 40 wieder im gleichen Netzwerk betrieben wird wie die entsprechende Steuerung 10', 10", 10‴, wird bevorzugt automatisch ein Abgleich zwischen den Versionsspeicher 106 in der entsprechenden Steuerung 10 und dem Versionsspeicher Spiegel 414 in der Versionsverwaltung 411 auf dem Rechner 40 vorgenommen.

Auch wenn eine der Steuerungen 10', 10" und 10‴ über einen anderen Rechner bearbeitet wird, bleiben auf diese Weise im Rechner 40, der das übergeordnete Projekt bearbeitet, die Teilprojekte der einzelnen Steuerungen 10', 10", 10‴ konsistent.

Auf diese Weise ist ein flexibles Arbeiten mit verteilten Projekten möglich. Auf die Teilprojekte der einzelnen Steuerungen 10', 10", 10‴ kann unter Nutzung der entsprechenden Netzwerkadresse unmittelbar zugegriffen werden und die Teilprojekte können unabhängig vom übergeordneten Projekt bearbeitet und verändert werden. Steuerungsübergreifend kann das Projekt dann auf dem in diesem Sinne übergeordneten Rechner 40 bearbeitet werden.

Vorteilhaft können Projekte so zunächst in kleinem Rahmen unter Einsatz einer Steuerung 10', 10", 10‴ begonnen werden und später in einen größeren Kontext, beispielsweise in eine größere Anlage, die von mehreren Steuerungen 10 kontrolliert wird, übernommen werden. Die Projekte skalieren entsprechend je nach Größe der gewählten Automatisierungslösung. Es lassen sich gut Varianten einer Automatisierungslösung erzeugen oder verwalten, wobei der Anwender sich nicht um die konsistente Zusammenführung der Teilprojekte kümmern muss, da dieses durch die Spiegelung der Versionsspeicher 106 automatisch vorgenommen wird. Wartung und Pflege eines verteilten Projekts wird so vereinfacht, da gezielt an einzelnen der Steuerungen 10 Anpassung vorgenommen werden können, ohne immer das gesamte Projekt übergeordnet bearbeiten zu müssen.

### Bezugszeichenliste

- 10: Steuerung
- 10' - 10‴: Steuerung
- 11: Netzwerkanschluss
- 12: Feldbusanschluss
- 13: weiterer Feldbusanschluss
- 14: USB-Anschluss
- 15: Kontrollanzeigen

- 100: Nicht-Echtzeitsystem
- 101: Webserver
- 102: Hochsprachencompiler
- 103: Bibliothek
- 104: Linker
- 105: Installation
- 106: Versionsspeicher
- 107: Schnittstelle
- 108: Kartenslot
- 109: nicht flüchtiger Speicher

- 110: Echtzeitsystem
- 111: Binärprogramm
- 112: Ablaufsteuerung
- 113: Schnittstelle
- 114: nicht flüchtiger Speicher

- 120: Prozessor
- 121: Kern
- 122: erster Zwischenspeicher
- 123: zweiter Zwischenspeicher
- 124: Arbeitsspeicher
- 125: Arbeitsspeicherbereich

- 20: Bussystem
- 21: E/A-Modul
- 22: Eingang
- 23: Ausgang
- 24: weiteres Bussystem
- 30: Netzwerk
- 31: Netzwerkkabel
- 32: Internet

- 40: Rechner
- 41: Webbrowser
- 410: Programm (Funktionsblockdiagramm)
- 411: Versionsverwaltung
- 412: Hochsprachenübersetzer
- 413: Hochsprachenprogramm
- 414' - 414‴: gespiegelter Versionsspeicher

## Patentansprüche

1. Verfahren zum Programmieren und Betreiben einer Steuerung (10, 10'-10‴) einer industriellen Automatisierungsanlage, bei dem ein Programm für die Steuerung (10) mit einem Entwicklungswerkzeug erstellt wird, mit den folgenden Schritten:
- Übertragen von Daten von einem in die Steuerung (10, 10'-10‴) integriertem Webserver (101) an einen Rechner (40), der über ein Netzwerk (30) mit der Steuerung (10, 10'-10‴) verbunden ist, wobei die Daten eine webbasierte Entwicklungsumgebung umfassen;
- Darstellen der Entwicklungsumgebung in einem Webbrowser (41), der auf dem Rechner (40) ausgeführt wird;
- Erstellen und/oder Bearbeiten eines Programms (410) für die Steuerung (10) durch einen Benutzer unter Nutzung der dargestellten Entwicklungsumgebung, **gekennzeichnet durch** die folgenden Schritte:
- Übersetzen des von dem Benutzer erstellten und/oder bearbeiteten Programms (410) mittels eines im Webbrowser (41) ausgeführten Übersetzungsmoduls (412) in ein Hochsprachenprogramm (413);
- Übertragen des Hochsprachenprogramms (413) an die Steuerung (10);
- Übersetzen des Hochsprachenprogramms (413) in ein Binärprogramm (111) innerhalb der Steuerung (10, 10'-10‴); und
- Ausführen des Binärprogramms (111) durch die Steuerung (10).

2. Verfahren nach Anspruch 1, bei dem das Programm (410) in einer grafischen Programmiersprache erstellt bzw. überarbeitet wird.

3. Verfahren nach Anspruch 1 oder 2, bei dem das Hochsprachenprogramm (413), in das das Übersetzungsmodul (412) das Programm (410) übersetzt, C-Quellcode umfasst.

4. Verfahren nach einem der Ansprüche 1 bis 3, bei dem neben dem Hochsprachenprogramm (413) auch das Programm (410) von dem Rechner (40) an die Steuerung (10, 10'-10‴) übertragen wird.

5. Verfahren nach einem der Ansprüche 1 bis 4, bei dem die Steuerung (10, 10'-10‴) einen Versionsspeicher (106) umfasst, in dem das Programm (410) und/oder das Hochsprachenprogramm (413) und/oder das Binärprogramm (111) gespeichert werden.

6. Verfahren nach Anspruch 5, bei dem zumindest das Programm (410) und das daraus erstellte Binärprogramm (111) zueinander zugeordnet in dem Versionsspeicher (106) abgelegt werden.

7. Verfahren nach Anspruch 6, bei dem verschiedene Entwicklungsstände des Programms (410) und das jeweils daraus erstellte Binärprogramm (111) zueinander zugeordnet in dem Versionsspeicher (106) abgelegt werden.

8. Verfahren nach einem der Ansprüche 5 bis 7, bei dem das in dem Versionsspeicher (106) gespeicherte Programm (410) zur Bearbeitung von dem Rechner (40) in die Entwicklungsumgebung ladbar ist.

9. Verfahren nach einem der Ansprüche 1 bis 8, bei dem Programme (410) für mindestens zwei Steuerungen (10, 10'-10‴) in dem Webbrowser (41) als ein übergeordnetes Projekt bearbeitbar sind.

10. Steuerung (10) für eine industrielle Automatisierungsanlage, **dadurch gekennzeichnet, dass** die Steuerung (10) einen Webserver (101) aufweist, der dazu eingerichtet ist, einem Rechner (40), der über ein Netzwerk (30) mit der Steuerung (10) verbunden ist, eine Entwicklungsumgebung für Programme (410) bereitzustellen, die in einem Webbrowser (41) auf dem Rechner (10) ausführbar ist, um ein Verfahren gemäß einem der Ansprüche 1 bis 9 auszuführen.

11. Steuerung (10) nach Anspruch 10, aufweisend ein Echtzeit-System (110) zum Ausführen eines Binärprogramms (111) zur Durchführung von Steuerungsaufgaben und ein Nicht-Echtzeitsystems (100) zur Bereitstellung des Webservers (41).

12. Steuerung (10) nach Anspruch 11, bei dem verschiedene Kerne (121) eines Prozessors (120) dem Echtzeit-System (110) und dem Nicht-Echtzeitsystem (100) zugeordnet sind.

13. Steuerung (10) nach Anspruch 12, bei dem jedem Kern (121) des Prozessors (120) exklusiv ein erster und/oder zweiter Zwischenspeicher (122, 123) zugeordnet ist.

14. Steuerung (10) nach einem der Ansprüche 11 bis 13, bei dem ein Teil eines Arbeitsspeichers (124) dem Echtzeit-System (110) und ein zweiter Teil dem Nicht-Echtzeitsystem (100) exklusiv zugeordnet ist, wohingegen auf einen dritten Teil des Arbeitsspeichers (124) sowohl das Echtzeit-System (110) als auch das Nicht-Echtzeitsystem (100) zugreifen kann.

15. Steuerung (10) nach Anspruch 11, bei dem dem Echtzeit-System (110) und dem Nicht-Echtzeitsystem (100) verschiedene Schnittstellen (113, 107) zugeordnet sind.

## Claims

1. A method for programming and operating a control system (10, 10'-10‴) of an industrial automation facility, in which a program for the control system (10) is developed with a development tool, having the following steps:
- transmission of data from a web server (101) built into the control system (10, 10'-10‴) to a computer (40) which is connected to the control system (10, 10'-10‴) via a network (30), the data comprising a web-based development environment;
- representation of the development environment in a web browser (41) embodied on the computer (40);
- development and/or processing of a program (410) for the control system (10) by a user and by using the represented development environment, **characterized by** the following steps:
- conversion of the program (410) developed and/or processed by the user into a high-level language program (413) by means of a conversion module (412) implemented in the web browser (41);
- transmission of the high-level language program (413) to the control system (10);
- conversion of the high-level language program (413) into a binary program (111) inside the control system (10, 10'-10‴); and
- implementation the binary program (111) by means of the control system (10).

2. The method according to claim 1, wherein the program (410) is developed and/or edited in a graphic programing language.

3. The method according to claim 1 or 2, in which the high-level language program (413), into which the conversion module (412) converts the program (410), comprises C source code.

4. The method according to any of claims 1 to 3, in which, in addition to the high-level language program (413), the program (410) is also transmitted to the control system (10, 10'-10‴) by the computer (40).

5. The method according to any of claims 1 to 4, in which the control system (10, 10'-10‴) comprises a version storage (106), in which the program (410) and/or the high-level language program (413) and/or the binary program (111) are stored.

6. The method according to claim 5, in which at least the program (410) and the binary program (111) developed from this are stored in the version storage (106) assigned to each other.

7. The method according to claim 6, in which different development states of the program (410) and the relevant binary program (111) developed from this are stored in the version storage (106) assigned to each other.

8. The method according to any of claims 5 to 7, in which the program (410) stored in the version storage (106) can be loaded into the development environment for processing by the computer (40).

9. The method according to any of claims 1 to 8, in which programs (410) for at least two control systems (10, 10'-10‴) can be processed in the web browser (41) as a superordinate project.

10. A control system (10) for an industrial automation facility, **characterized in that** the control system (10) has a web server (101), which is adapted to provide to a computer (40), which is connected to the control system (10) via a network (30), a development environment for programs (410), which can be implemented in a web browser (41) on the computer (10), in order to perform a method according to any of claims 1 to 9.

11. The control system (10) according to claim 10, having a real-time system (110) for implementing a binary program (111) for the performance of control tasks and a non-real time system (100) for the provision of the web server (41).

12. The control system (10) according to claim 11, in which different cores (121) of a processor (120) are assigned to the real-time system (110) and the non-real time system (100).

13. The control system (10) according to claim 12, in which a first and/or second intermediate storage (122, 123) is assigned exclusively to each core (121) of the processor (120).

14. The control system (10) according to any of claims 11 to 13, in which a part of the memory (124) is exclusively assigned to the real-time system (110) and a second part to the non-real time system (100), whereas a third part of the memory (124) can access both the real-time system (110) and the non-real time system (100).

15. The control system (10) according to claim 11, in which different interfaces (113, 107) are assigned to the real-time system (110) and the non-real time system (100).

## Revendications

1. Procédé pour la programmation et le pilotage d'une unité de commande (10, 10'-10‴) d'un automatisme industriel, dans lequel un programme est créé pour l'unité de commande (10) à l'aide d'un outil de développement, comprenant les étapes suivantes :
- transfert de données d'un serveur Web (101) intégré dans l'unité de commande (10, 10'-10‴) vers un ordinateur (40) qui est relié à l'unité de commande (10, 10'-10‴) par un réseau (30), les données comprenant un environnement de développement en base Web ;
- représentation de l'environnement de développement dans un navigateur Web (41) exécuté sur l'ordinateur (40) ;
- création et/ou édition d'un programme (410) pour l'unité de commande (10) par un utilisateur à l'aide de l'environnement de développement représenté,
**caractérisé en ce qu'**il comprend les étapes suivantes :
- traduction du programme (410) créé et/ou développé par l'utilisateur dans un programme en langage évolué (413) au moyen d'un module de traduction (412) exécuté dans le navigateur Web (41) ;
- transmission du programme en langage évolué (413) à l'unité de commande (10) ;
- traduction du programme en langage évolué (413) dans un programme binaire (111) à l'intérieur de l'unité de commande (10, 10'-10‴) et
- exécution du programme binaire (111) par l'unité de commande (10).

2. Procédé selon la revendication 1, dans lequel le programme (410) est créé ou édité dans un langage de programmation graphique.

3. Procédé selon la revendication 1 ou 2, dans lequel le programme en langage évolué (413) dans lequel le module de traduction (412) traduit le programme (410) contient un code-source en C.

4. Procédé selon l'une des revendications 1 à 3 dans lequel, outre le langage en programme supérieur (413), le programme (410) est lui aussi transmis de l'ordinateur (40) à l'unité de commande (10, 10'-10‴).

5. Procédé selon l'une des revendications 1 à 4, dans lequel l'unité de commande (10, 10'-10‴) comprend une mémoire de versions (106) dans laquelle le programme (410) et/ou le programme en langage évolué (413) et/ou le programme binaire (111) sont stockés.

6. Procédé selon la revendication 5, dans lequel au moins le programme (410) et le programme binaire (111) qui en est issu sont enregistrés associés l'un à l'autre dans la mémoire de versions (106).

7. Procédé selon la revendication 6, dans lequel différents états de développement du programme (410) et le programme binaire (111) issu de chacun sont enregistrés associés l'un à l'autre dans la mémoire de versions (106).

8. Procédé selon l'une des revendications 5 à 7, dans lequel le programme (410) enregistré dans la mémoire de versions (106) peut être chargé par l'ordinateur (40) dans l'environnement de développement en vue de l'édition.

9. Procédé selon l'une des revendications 1 à 8, dans lequel des programmes (410) pour au moins deux commandes (10, 10'-10‴) peuvent être exécutés dans le navigateur Web (41) comme un projet de niveau supérieur.

10. Unité de commande (10) pour un automatisme industriel, **caractérisée en ce que** l'unité de commande (10) comporte un serveur Web (101) conçu pour créer, dans un ordinateur (40) relié à l'unité de commande (10) par un réseau (30), un environnement de développement pour des programmes (410) exécutables dans un navigateur Web (41) sur l'ordinateur (10) pour exécuter un procédé selon l'une des revendications 1 à 9.

11. Unité de commande (10) selon la revendication 10, comprenant un système temps réel (110) pour l'exécution d'un programme binaire (111) pour la réalisation de tâches de commande et un système non temps réel (100) pour la création du serveur Web (41).

12. Unité de commande (10) selon la revendication 11, dans laquelle différents cœurs (121) d'un processeur (120) sont associés au système temps réel (110) et au système non temps réel (100).

13. Unité de commande (10) selon la revendication 12, dans laquelle chaque cœur (121) du processeur (120) est associé exclusivement à une première et/ou une deuxième mémoire intermédiaire (122, 123).

14. Unité de commande (10) selon l'une des revendications 11 à 13, dans laquelle une partie d'une mémoire de travail (124) est associée exclusivement au système temps réel (110) et une deuxième partie exclusivement au système non temps réel (100), alors qu'une troisième partie de la mémoire de travail (124) est accessible aussi bien au système temps réel (110) qu'au système non temps réel (100).

15. Unité de commande (10) selon la revendication 11, dans laquelle différentes interfaces (113, 107) sont associées au système temps réel (110) et au système non temps réel (100).
